# EUROPÄISCHE PATENTSCHRIFT

(11) **EP 1 683 257 B1**
(45) Veröffentlichungstag und Bekanntmachung des Hinweises auf die Patenterteilung: **28.09.2011**
(21) Anmeldenummer: 04817399.1
(22) Anmeldetag: 02.11.2004
(51) Int. Cl.: H05B 6/06, H02M 7/48

(54) **VERFAHREN ZUR VERMEIDUNG BZW. REDUKTION VON STÖRSCHALL IN EINER UMRICHTERSCHALTUNG BEI GLEICHZEITIGEM BETRIEB MEHRERER AUSGÄNGE**
METHOD FOR AVOIDING OR REDUCING NOISE INTERFERENCE IN A CONVERTER CIRCUIT WITH MULTIPLE SIMULTANEOUSLY OPERATED OUTPUTS
PROCEDE D'EVITEMENT OU REDUCTION DU BRUIT DANS UN CONVERTISSEUR AVEC BEAUCOUP DE SORTIES SIMULTANÉMENT ACTIONNÉES

(30) Priorität: 03.11.2003 ES 200302616
(43) Veröffentlichungstag der Anmeldung: 26.07.2006
(60) Teilanmeldung: 11176419.7
(73) Patentinhaber: BSH Bosch und Siemens Hausgeräte GmbH, 81739 München (DE)
(72) Erfinder: BURDIO PINILLA, José Miguel, E-50005 Zaragoza (ES); BARRAGAN PEREZ, Luis Angel, E-50018 Zaragoza (ES); HERNANDEZ BLASCO, Pablo, E-50017 Zaragoza (ES); LORENTE PEREZ, Alfonso, E-50013 Zaragoza (ES); MONTERDE AZNAR, Fernando, E-50013 Zaragoza (ES); LLORENTE GIL, Sergio, E-50009 Zaragoza (ES)
(86) Internationale Anmeldenummer: PCT/EP2004/052755
(87) Internationale Veröffentlichungsnummer: WO 2005/043737

(56) Entgegenhaltungen:
- EP-A- 0 888 033
- EP-A- 0 926 926
- DE-A1- 19 654 268
- US-B1- 6 528 770
- PATENT ABSTRACTS OF JAPAN Bd. 1996, Nr. 12, 26. Dezember 1996 (1996-12-26) -& JP 08 213163 A (MATSUSHITA ELECTRIC IND CO LTD), 20. August 1996 (1996-08-20)

## Beschreibung

Die vorliegende Erfindung betrifft ein Verfahren zum Betreiben einer Umrichterschaltung mit mindestens zwei Ausgängen, die mit je einer Last, insbesondere je einer Induktionsspule, verbunden sind, wobei ein erster der Ausgänge mit einer ersten Umschaltfrequenz und gleichzeitig ein zweiter der Ausgänge mit einer zweiten von der ersten verschiedenen Umschaltfrequenz betrieben wird, so dass Störschall mit einer Frequenz erzeugt wird, die sich aus einer Überlagerung der ersten Umschaltfrequenz mit der zweiten Umschaltfrequenz ergibt.

Moderne Induktionskochfelder sind üblicherweise mit zwei oder vier Induktionskochstellen ausgestattet. Die Induktionskochstellen weisen Induktionsspulen auf, die über Umrichterschaltungen mit hochfrequenten Betriebsströmen versorgt werden. Es ist bekannt zwei Induktionsspulen gemeinsam durch eine Umrichterschaltung mit zwei Ausgängen zu betreiben, wobei jeder der Ausgänge mit einer Induktionsspule verbunden ist. Um Störgeräuschen bei gleichzeitigem Betrieb der beiden Ausgänge zu vermeiden oder zu reduzieren, sind verschiedene Vorgehensweisen vorgeschlagen worden. JP 08 213163 A betrifft ein Induktionskochgerät, bei dem ein Interferenzgeräusch unterschiedlicher magnetischer Felder reduziert werden soll.
US 6,528,770 B1 betrifft eine Induktionsherdplatte mit mehreren Induktionsfeldern, wobei die mehreren Induktionsfelder mittels unterschiedlicher Generatoren angesteuert werden, um Schwebungsfrequenzen zu vermeiden.

Aus DE 196 54 268 C2 ist ein Verfahren zum Betreiben der Umrichterschaltung bekannt, bei dem beide Ausgänge der Umrichterschaltung im Zeitmultiplex betrieben werden, so dass keine Störgeräusche entstehen können. Der Nachteil dieses Verfahrens besteht darin, dass eine aufwendige Ansteuerung und eine Überdimensionierung der Leistungselektronik notwendig ist.

Wird auf das Betreiben der Ausgänge im Zeitmultiplex verzichtet und die beiden Induktionsspulen gleichzeitig mit Betriebsströmen unterschiedlicher Frequenz versorgt, so entstehen Störgeräusche. Es ist bekannt durch Drosselspulen, die in Serie zur Induktionsspule geschaltet sind, diese Störgeräusche zu reduzieren. Der Nachteil dieses Verfahrens besteht darin, dass das Verfahren nicht immer stabil ist. Zudem können die Störgeräusche nur gedämpft werden und die Drosselspulen sind als zusätzliche Bauteile nötig, wodurch sich die Umrichterschaltung verteuert.

Der Erfindung liegt die Aufgabe zugrunde, ein verbessertes und kostengünstiges Verfahren zum Betreiben einer Umrichterschaltung mit mindestens zwei Ausgängen, insbesondere für ein Induktionskochfeld, zur Verfügung zu stellen.

Diese Aufgabe wird durch ein Verfahren zum Betreiben einer Umrichterschaltung mit den Merkmalen von Anspruch 1 gelöst. Vorteilhafte Weiterbildungen sind in den abhangigen Ansprüchen definiert.

Bei einer Umrichterschaltung mit mindestens zwei Ausgängen, die mit je einer Last, insbesondere je einer Induktionsspule, verbunden sind, wird ein erster der Ausgänge mit einer ersten Umschallfrequenz und gleichzeitig ein zweiter der Ausgänge mit einer zweiten von der ersten verschiedenen Umschalffrequenz betrieben. Auf diese Weise wird Störschall mit einer Frequenz erzeugt, die sich aus einer Überlagerung der ersten Umschaltfrequenz mit der zweiten Umschaltfrequenz ergibt. Die Umrichterschaltung wird derart betrieben, dass die Frequenz des Störschalls kleiner ist als eine erste Grenzfrequenz und/oder größer ist als eine zweite Grenzfrequenz. Dieses Vorgehen hat den Vorteil, dass Störschall mit einer Frequenz erzeugt werden kann, die außerhalb des menschlichen Hörbereichs liegt, indem die erste Grenzfrequenz und die zweite Grenzfrequenz entsprechend gewählt werden. Des weiteren können die Induktionsspulen mit Frequenzen betrieben werden, bei denen ein hoher Wirkungsgrad erzielt werden kann. Außerdem kann auf zusätzliche Bauteile wie Drosselspulen zur Reduzierung des Störschalls verzichtet werden.

Gemäß einer bevorzugten Ausführungsform ist vorgesehen, dass die erste Umschaltfrequenz und/oder die zweite Umschaltfrequenz derart betrieben wird, dass die Frequenz des Störschalls kleiner ist als die erste Grenzfrequenz und/oder größer ist als die zweite Grenzfrequenz. Die Umschaltfrequenzen der Ausgänge können über intelligente Leistungsschalter auf einfache Weise angepasst werden.

Vorteilhafterweise wird eine elektrische Leistung zumindest eines der Ausgänge durch eine relative Einschaltdauer und/oder die Umschaltfrequenz geregelt. Somit kann die Umrichterschaltung mit den Induktionsspulen derart betrieben werden, dass ein hoher Wirkungsgrad erreicht wird.

Gemäß einer bevorzugten Ausführungsform ist vorgesehen, dass die erste Grenzfrequenz und/oder die zweite Grenzfrequenz abhängig von einem Pegel des Störschalls bestimmt wird. Auf diese Weise können die Grenzfrequenzen an die menschliche Hörschwelle angepasst werden, so dass der Störschall nicht wahrgenommen werden kann.

Insbesondere werden die erste Grenzfrequenz und/oder die zweite Grenzfrequenz abhängig von einer elektrischen Gesamtleistung der Ausgänge bestimmt. Der Pegel des Störschalls ist von der elektrischen Gesamtleistung der Ausgänge abhängig und die elektrische Gesamtleistung kann leicht bestimmt werden. Auf diese Weise können die Grenzfrequenzen besonders leicht an die menschliche Hörschwelle angepasst werden.

Gemäß einer bevorzugten Ausführungsform ist vorgesehen, dass die erste Grenzfrequenz 2 Kilohertz und/oder die zweite Grenzfrequenz 14 Kilohertz beträgt. Für diese Grenzfrequenzen liegt die menschliche Hörschwelle sehr hoch, so dass der Pegel des Störschalls die menschliche Hörschwelle nicht erreicht oder nur unwesentlich überschreitet.

Insbesondere betrifft die Erfindung ein Induktionsgargerät, wie z.B. ein Induktionskochfeld oder einen Herd mit einem Induktionsheizelement.

Die Erfindung und ihre Weiterbildungen werden nachfolgend anhand von Zeichnungen näher erläutert:

Es zeigen

Fig.1a eine erste Ausführungsform einer Umrichterschaltung,

Fig.1b eine zweite Ausführungsform einer Umrichterschaltung

Fig.2 eine schematische Darstellung möglicher Frequenzen eines Störschalls bei Betrieb der Umrichterschaltungen gemäß Figur 1,

Fig.3 einen schematischen Verlauf der menschlichen Hörschwelle,

Fig.4 ein schematischer zeitlicher Verlauf einer Periode einer Ausgangsspannung der Umrichterschaltungen gemäß Figur 1, und

Fig.5 eine schematische Darstellung einer Anpassung von elektrischen Ausgangsleistungen für die Umrichterschaltungen gemäß Figur 1 unter Berücksichtigung von einer ersten und einer zweiten Grenzfrequenz.

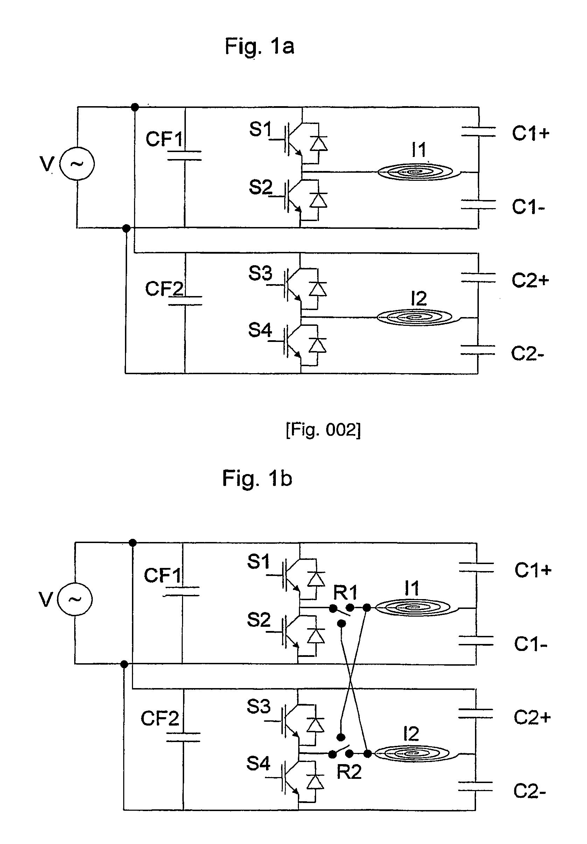

Figur 1a und 1b zeigen in schematischer Darstellung zwei verschiedene Ausführungsformen einer Umrichterschaltung mit zwei Ausgängen bzw. Induktionsspulen. Hierin bezeichnet V eine Spannungsquelle, I1 eine erste und I2 eine zweite Induktionsspule, S1, S2, S3 und S4 Hochfrequenzschalter, CF1 und CF2 kapazitive Eingangsfilter und C1+, C1-, C2+ und C2- Kondensatoren. Die zweite Ausführungsform (Fig.1b) unterscheidet sich von der ersten Ausführungsform (Fig1a) dadurch, dass zwei Umschalter R1, R2 zur Rekonfigurierung der Topologie vorgesehen sind, für den Fall, dass nicht beide Induktionsspulen I1, I2 eingeschaltet bzw. nicht beide Ausgänge aktiv sind.

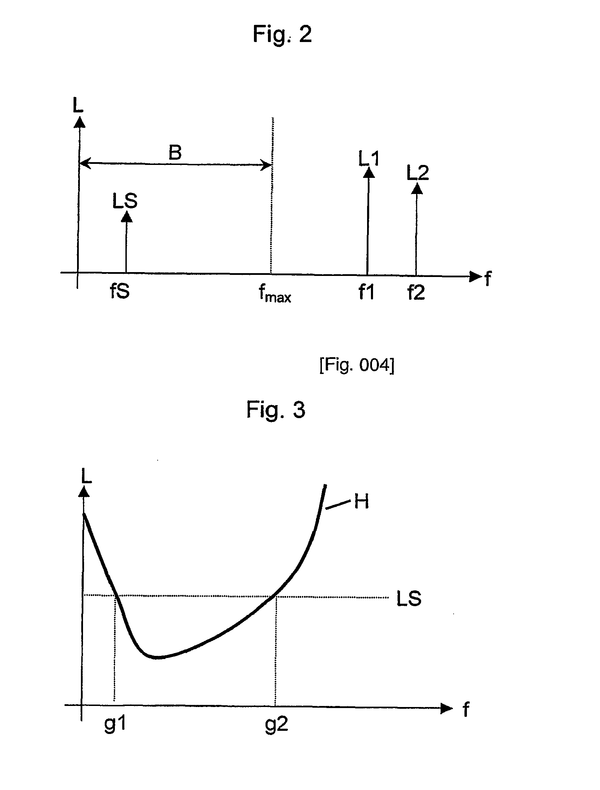

Figur 2 zeigt eine schematische Darstellung möglicher Frequenzen eines Störschalls bei Betrieb der Umrichterschaltungen gemäß Figur 1a oder 1b. Die erste Induktionsspule I1 wird mit einer ersten Umschaltfrequenz f1 und die zweite Induktionsspule I2 mit einer zweiten Umschaltfrequenz f2 betrieben, die größer ist als die erste Umschaltfrequenz f1. Beide Umschalffrequenzen f1, f2 liegen über einen maximalen Frequenz fₘₐₓ die vom menschlichen Gehör wahrgenommen werden kann. Auf diese Weise kann Störschall der mit den Umschaltfrequenzen f1 und f2 entsteht nicht vom Menschen gehört werden. Durch eine Überlagerung der beiden Umschaltfrequenzen f1, f2 entsteht weiterer Störschall mit beispielsweise einer Frequenz fS, die einer Differenz aus der zweiten Umschaltfrequenz f2 minus der ersten Umschaltfrequenz f1 entspricht. Diese Frequenz fS kann in einem Frequenzband B liegen, welches die vom Menschen wahrnehmbaren Frequenzen angibt. Der Störschall kann bei unterschiedlichen Frequenzen f1, f2, fS unterschiedlichen Pegel L1, L2, LS haben, was durch Pfeile unterschiedlicher Länge bei den Frequenzen f1, f2 und fS in Figur 2 angedeutet ist.

Figur 3 zeigt einen schematischen Verlauf der menschlichen Hörschwelle H. Je nach Frequenz f kann vom menschlichen Gehör ein unterschiedlicher minimaler Schallpegel L wahrgenommen werden, der durch den Verlauf der Hörschwelle H in Figur 3 angegeben ist. Anhand des Pegels LS des Störschalls und dessen Schnittpunkte mit dem Verlauf der Hörschwelle H werden eine erste Grenzfrequenz g1 und eine zweite Grenzfrequenz g2 festgelegt, wobei die erste Grenzfrequenz g1 kleiner ist als die zweite Grenzfrequenz g2. Die Umrichterschaltungen gemäß Figur 1a und 1b werden erfindungsgemäß so betrieben, dass die Frequenz fS des Störschalls kleiner ist als die erste Grenzfrequenz g1 oder größer als die zweite Grenzfrequenz g2. Auf diese Weise liegt der Störschall außerhalb des menschlichen Hörbereichs und kann somit nicht wahrgenommen werden. Der Pegel LS des zu erwartenden Störschalls kann beispielsweise anhand der Umschaltfrequenzen f1, f2 und der den Induktionsspulen I1, I2 zugeführten elektrischen Leistungen P1 und P2 abgeschätzt werden. Alternativ können experimentelle Grenzfrequenzen g1, g2 festgelegt werden, beispielsweise die erste Grenzfrequenz g1 bei 2 Kilohertz und die zweite Grenzfrequenz g2 bei 14 Kilohertz.

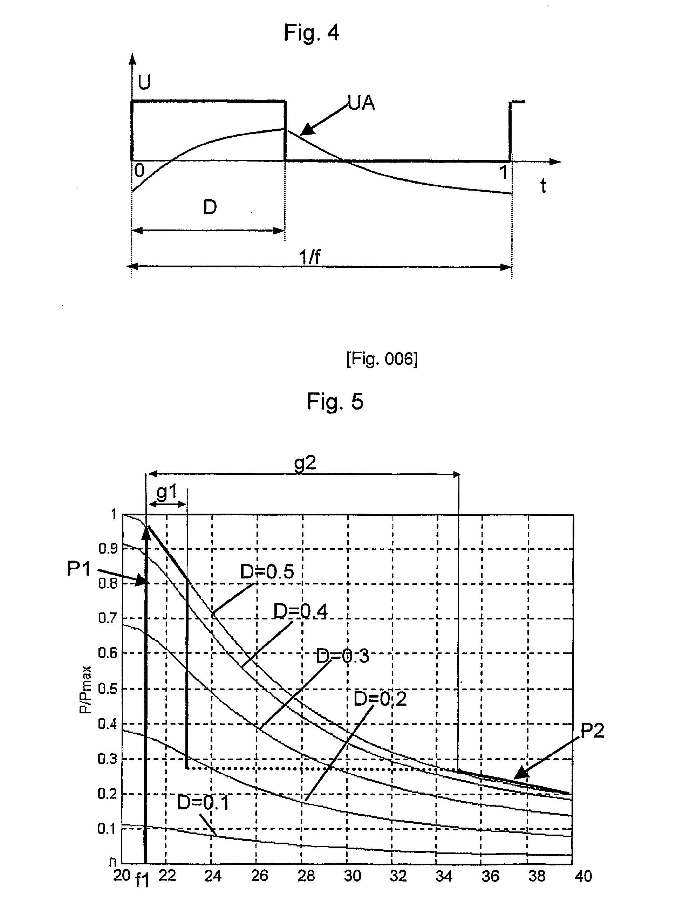

Parameter für eine Anpassung der den Induktionsspulen I1, I2 zugeführten elektrischen Leistungen P1, P2 sind zum einen die Umschaltfrequenzen f1, f2 und zum anderen eine relative Einschaltdauer D. In Figur 4 ist ein schematischer zeitlicher Verlauf einer Periode einer Ausgangsspannung UA der Umrichterschaltungen gemäß Figur 1a und 1b gezeigt. Die Periode 1/f ist in Figur 4 auf Eins normiert. Die Ausgangsspannung UA steigt während der relativen Einschaltdauer D an und klingt danach langsam wieder ab. Die den Induktionsspulen I1, I2 zugeführten elektrischen Leistungen P1, P2 werden für relative Einschaltdauern D von 0.5 maximal.

In Figur 5 ist eine schematische Darstellung einer Anpassung der elektrischen Ausgangsleistungen P1 und P2 für die beiden Induktionsspulen I1, I2 gemäß den Umrichterschaltungen aus Figur 1a und 1b unter Berücksichtigung der beiden Grenzfrequenzen g1 und g2 gezeigt. Für beispielsweise die erste Induktionsspule I1, die von beiden Induktionsspulen I1, I2 die höhere elektrische Leistung P1 benötigt, wird die Umschaltfrequenz f1 beispielsweise bei 21 Kilohertz und die relative Einschaltdauer D bei 0.5 festgelegt. Die elektrische Leistung P2 für die zweite Induktionsspule I2 wird nun durch die relative Einschaltdauer D und durch die Umschaltfrequenz f2 unter Berücksichtigung der beiden Grenzfrequenzen g1 und g2 eingestellt. Die zweite Umschaltfrequenz f2 kann im Bereich zwischen der ersten Umschaltfrequenz f1 (hier 21 Kilohertz) und der Summe aus erster Umschaltfrequenz f1 und erster Grenzfrequenz g1 liegen (hier 23 Kilohertz) und oberhalb der Summe aus erster Umschaltfrequenz f1 und zweiter Grenzfrequenz g2 liegen (hier 35 Kilohertz). Auf diese Weise ist sichergestellt, dass der Störschall mit der Frequenz fS, die aus der Differenz der zweiten Umschaltfrequenz f2 und der ersten Umschaltfrequenz f1 entsteht, vom menschlichen Gehör nicht wahrgenommen wird.

Bezugszeichenliste

B Frequenzband

C1+ Kondensator

C1- Kondensator

C2+ Kondensator

C2- Kondensator

CF1 Kapazitives Eingangsfilter

CF2 Kapazitives Eingangsfilter

D Relative Einschaltdauer

f Frequenz

f Maximale Frequenz, die vom menschlichen Gehör wahrgenommen wird max

f1 Umschaltfrequenz der ersten Induktionsspule

f2 Umschaltfrequenz der zweiten Induktionsspule

fS Frequenz des Störschalls

g 1 Erste Grenzfrequenz

g2 Zweite Grenzfrequenz

H Hörschwelle

I1 Erste Induktionsspule

I2 Zweite Induktionsspule

L Schallpegel

L1 Schallpegel bei der ersten Umschaltfrequenz

L2 Schallpegel bei der zweiten Umschaltfrequenz

LS Pegel des Störschalls bei fS

P Elektrische Leistung

P1 Elektrische Leistung der ersten Induktionsspule

P2 Elektrische Leistung der zweiten Induktionsspule

R1 Umschalter

R2 Umschalter

t Zeit

U Spannung

UA Ausgangsspannung

V Spannungsquelle

## Patentansprüche

1. Verfahren zum Betreiben einer Umrichterschaltung mit mindestens zwei Ausgängen, die mit je einer Last, insbesondere je einer Induktionsspule (l1, l2), verbunden sind, wobei ein erster der Ausgänge (l1) mit einer ersten Umschaltfrequenz (f1) und gleichzeitig ein zweiter der Ausgänge (l2) mit einer zweiten von der ersten verschiedenen Umschaltfrequenz (f2) betrieben wird, so dass Störschall mit einer Frequenz (fS) erzeugt wird, die sich aus einer Überlagerung der ersten Umschaltfrequenz (f1) mit der zweiten Umschaltfrequenz (f2) ergibt, **dadurch gekennzeichnet, dass** die Umrichterschaltung derart betrieben wird, dass die Frequenz (fS) des Störschalls größer ist als eine zweite Grenzfrequenz (g2), wobei die zweite Grenzfrequenz (g2) anhand eines Schnittpunkts des Störschalls mit dem Verlauf einer Hörschwelle (H) bestimmt wird.

2. Verfahren nach Anspruch 1, **dadurch gekennzeichnet, dass** eine erste Umschaltfrequenz (f1) und/oder die zweite Umschaltfrequenz (f2) derart eingestellt wird, dass die Frequenz (fS) des Störschalls kleiner ist als die erste Grenzfrequenz (g1) und/oder größer ist als die zweite Grenzfrequenz (g2).

3. Verfahren nach Anspruch 1 oder 2, **dadurch gekennzeichnet, dass** eine elektrische Leistung (P1, P2) zumindest eines der Ausgänge (l1, l2) durch eine relative Einschaltdauer (D) und/oder die Umschaltfrequenz (f1, f2) geregelt wird.

4. Verfahren nach einem der Ansprüche 1 bis 3, **dadurch gekennzeichnet, dass** die erste Grenzfrequenz (g1) und/oder die zweite Grenzfrequenz (g2) abhängig von einem Pegel (LS) des Störschalls bestimmt wird.

5. Verfahren nach einem der Ansprüche 1 bis 3, **dadurch gekennzeichnet, dass** die erste Grenzfrequenz (g1) und/oder die zweite Grenzfrequenz (g2) abhängig von einer elektrischen Gesamtleistung (P1, P2) der Ausgänge (l1, l2) bestimmt wird.

6. Verfahren nach einem der Ansprüche 1 bis 3, **dadurch gekennzeichnet, dass** die erste Grenzfrequenz (g1) 2 Kilohertz und/oder die zweite Grenzfrequenz (g2) 14 Kilohertz beträgt.

## Claims

1. Method of operating a frequency converter circuit with at least two outputs, which are each connected with a respective load, particularly a respective induction coil (l1, l2), wherein a first one of the outputs (l1) is operated at a first switch-over frequency (f1) and at the same time a second one of the outputs (l2) is operated at a second switch-over frequency (f2) different from the first so that interference noise at a frequency (fS) is generated, which results from superimposition on the second switch-over frequency (f2) of the first switch-over frequency (f1), **characterised in that** the frequency converter circuit is operated in such a manner that the frequency (fS) of the interference noise is greater than a second limit frequency (g2), wherein the second limit frequency (g2) is determined on the basis of an intersection of the interference noise with the plot of a threshold of audibility (H).

2. Method according to claim 1, **characterised in that** the first switch-over frequency (f1) and/or the second switch-over frequency (f2) is or are such that the frequency (fS) of the interference noise is smaller than the first limit frequency (g1) and/or greater than the second limit frequency (g2).

3. Method according to claim 1 or 2, **characterised in that** an electrical power (P1, P2) of at least one of the outputs (l1, l2) is regulated by a relative switch-on duration (D) and/or the switch-over frequency (f1, f2).

4. Method according to any one of claims 1 to 3, **characterised in that** the first limit frequency (g1) and/or the second limit frequency (g2) is or are determined in dependence on a level (LS) of the interference noise.

5. Method according to any one of claims 1 to 3, **characterised in that** the first limit frequency (g1) and/or the second limit frequency (g2) is or are determined in dependence on an electrical total power (P1, P2) of the outputs (l1, l2).

6. Method according to any one of claims 1 to 3, **characterised in that** the first limit frequency (g1) is 2 kiloHertz and/or the second limit frequency (g2) is 14 kiloHertz.

## Revendications

1. Procédé de fonctionnement d'un circuit de convertisseur comprenant au moins deux sorties qui sont chacune connectées au moyen d'une charge, notamment chacune au moyen d'une bobine d'induction (l1, l2), une première des sorties (l1) fonctionnant avec une première fréquence de commutation (f1) et, simultanément, une deuxième des sorties (l2) fonctionnant avec une deuxième fréquence de commutation (f2) différente de la première, de sorte qu'un bruit parasite ayant une fréquence (fS) est généré, laquelle résulte d'une superposition de la première fréquence de commutation (f1) avec la deuxième fréquence de commutation (f2), **caractérisé en ce que** le circuit de convertisseur fonctionne de manière à ce que la fréquence (fS) du bruit parasite soit supérieure à une deuxième fréquence limite (g2), la deuxième fréquence limite (g2) étant déterminée à l'aide d'un point d'intersection du bruit parasite avec l'allure d'un seuil d'audibilité (H).

2. Procédé selon la revendication 1, **caractérisé en ce qu'**une première fréquence de commutation (f1) et/ou la deuxième fréquence de commutation (f2) sont réglées de manière à ce que la fréquence (fS) du bruit parasite soit inférieure à la première fréquence limite (g1) et/ou supérieure à la deuxième fréquence limite (g2).

3. Procédé selon la revendication 1 ou 2, **caractérisé en ce qu'**une puissance électrique (P1, P2) d'au moins une des sorties (l1, l2) est réglée au moyen d'une durée de fermeture (D) et/ou de la fréquence de commutation (f1, f2).

4. Procédé selon l'une quelconque des revendications 1 à 3, **caractérisé en ce que** la première fréquence limite (g1) et/ou la deuxième fréquence limite (g2) sont déterminées en fonction d'un niveau (LS) du bruit parasite.

5. Procédé selon l'une quelconque des revendications 1 à 3, **caractérisé en ce que** la première fréquence limite (g1) et/ou la deuxième fréquence limite (g2) sont déterminées en fonction d'une puissance électrique totale (P1, P2) des sorties (l1, l2).

6. Procédé selon l'une quelconque des revendications 1 à 3, **caractérisé en ce que** la première fréquence limite (g1) est de 2 kilohertz et/ou la deuxième fréquence limite (g2) est de 14 kilohertz.
